(19) Europäisches Patentamt

European Patent Office

Office européen des brevets

(11) **EP 1 098 851 B1**

(12) **EUROPEAN PATENT SPECIFICATION**

(45) Date of publication and mention
of the grant of the patent:
**27.08.2003 Bulletin 2003/35**

(51) Int Cl.[7]: **C02F 1/28**, C04B 28/04,
C04B 28/10, B01J 20/30,
B01J 20/04, B09C 1/08

(21) Application number: **99931743.1**

(22) Date of filing: **21.07.1999**

(86) International application number:
**PCT/SK99/00011**

(87) International publication number:
**WO 00/005178 (03.02.2000 Gazette 2000/05)**

(54) **SORBENT, METHOD FOR PRODUCING THE SAME AND USE OF THE SAME FOR IMMOBILISATION OF HEAVY METALS AND PHOSPHATES**

SORPTIONSMITTEL, METHODE ZU SEINER HERSTELLUNG UND SEINE VERWENDUNG FÜR DIE IMMOBILISIERUNG VON SCHWERMETALLEN UND PHOSPHATEN

SORBANT, PROCEDE DE PRODUCTION DE CELUI-CI ET UTILISATION DE CE SORBANT AFIN D'IMMOBILISER DES METAUX LOURDS ET DES PHOSPHATES

(84) Designated Contracting States:
**AT BE CH CY DE DK ES FI FR GB GR IE IT LI LU MC NL PT SE**

(30) Priority: **22.07.1998 SK 981000**

(43) Date of publication of application:
**16.05.2001 Bulletin 2001/20**

(73) Proprietor: **Ipres Inziniering S.R.O.**
**841 05 Bratislava (SK)**

(72) Inventor: **KOREC, Stefan**
**965 01 Ziar n/ Hronom (SK)**

(74) Representative: **Goy, Wolfgang, Dipl.-Phys.**
**Zähringer Strasse 373**
**79108 Freiburg (DE)**

(56) References cited:
EP-A- 0 455 621          DE-A- 3 624 300
FR-A- 2 740 361          GB-A- 647 910

• DATABASE WPI Section Ch, Week 199438
Derwent Publications Ltd., London, GB; Class
D15, AN 1988-087150 XP002122616 & JP 06
077732 B (SHINKO KOGYO KK), 5 October 1994
(1994-10-05)
• DATABASE WPI Section Ch, Week 198750
Derwent Publications Ltd., London, GB; Class
D15, AN 1987-354308 XP002122615 & SU 1 308
552 A (ZHANTALAI V P), 7 May 1987 (1987-05-07)

## Description

Technical field of the invention

This invention relating to a composite sorbent of inorganic nature and method for producing the sorbent, and particularly to use of the same for removing and immobilisation of cations of the heavy metals and/or phosphates from contaminated aqueous, or soils, sediments or solid wastes (sludges):

Background art of the invention

Various sorbents functioning on a principle of cation exchange (ion exchangers) such as natural zeolites or alumino-silicates with a very low sorption capacity are known and commonly used in practice. These materials are mostly selective either to individual ions or to particular classes of ions, and their sorption capacity can be exhausted very quickly after reaching the equilibrium.

Many natural materials functioning on principles of ion exchange, physical adsorption or chemisorption can be used only in a powder-like form. Finely milled, powdered organic materials, powdered coal, bentonite, various clays, natural zeolites, coal ashes or slags are typical representatives of the latter class of sorbents. However, these materials cannot be directly used as the filter body (matrix), have a very low sorption capacity, and flocculation and separation of these fine materials from contaminated water by filtration after their active service life may cause serious problems in an actual technological process.

Also a very efficient method for fixation of cations of the heavy metals, directly using lime or portland cement is known. However, the application of this direct method is limited by some technical problems (e.g. using lime or portland cement as the filter body (matrix) material and, from a chemical point of view, very high pH values reached in the system can lead to repeated dissolution of precipitated salts.

The term sorbent is used herein this invention for any representative of the class of materials characterised by their ability to immobilise cations of the heavy metals and/or phosphates by absorption, adsorption or chemisorption, or by any other mechanism. The sorbent is able to change pH in the system, to act as a buffer at the solid-contaminated liquid interface and to precipitate cations of the heavy metals in the bulk liquid. This is accompanied by formation of hydroxysalts, hydrated oxides or hydroxides of individual heavy metals, resulting in a physico-chemical fixation of a part of precipitated metal cations on a rough surface of the porous sorbent.

Technical solutions using adsorbents for fixation of cations of the heavy metals are referred to in the patent literature (PCT WO 93/16797): the adsorbent consists of complexes created by smectites (minerals of the montmorillonite group), aluminium hydroxide and a phosphate, functioning at pH values of about 5 to 6. This adsorbent is dried at temperature of 40°C and used in form of a powder; in filters it is used in combination with fibrous or granular body (matrix)-forming materials. This adsorbent can be mixed with contaminated soils to immobilise cations of the heavy metals, as well. Form in which the heavy metals are present in the contaminated soil can be changed by this method in such a way, that biological accessibility of the cations for plants is dramatically reduced - hence, such soils can be assumed to be purified. Values of the effectiveness of immobilisation between 74 and 82 % can be reached by this method. Because of their relatively low permeability for an aqueous phase, adsorbents based on soils (clay minerals) can be rather used as sealing materials (passive inhibition) than the filter body (matrix).

The principle of another known technical solution of this problem (WO 94/06717) is as follows: a contaminated aqueous phase is brought into contact with particles of an inert carrier (mineral grains or iron particles) of diameter 0.1 to 2.5 mm, with density $1g.cm^{-3}$, in presence of dissolved ferrous ions ($Fe^{2+}$) and a gaseous oxidising agent (oxygen or ozone), at pH between 2.5 and 8.5. The surface of carrier particles, which are suspended in an agitated purified aqueous phase, is activated by adsorption of ferrous ions from the liquid phase, which consequently results in more intensive fixation of other metal cations - including also cations of the heavy metals. This adsorbent and method of its application are appropriate to purification of waters containing iron as well as those with high contents of chromium. Flowing rate of the aqueous phase used was 3 m/h ( meters per hr) at filtration capacity approx. 24 l/h (litres per hr). This method can be also used to remove arsenic from contaminated waters. However, it does not deal with a complex removal or fixation of the most of cations of the heavy metals and requires special technological equipment a reactor keeping the carrier particles in a whirling motion through an aqueous phase, supplied by inflows of ferrous ions and an oxidising agent This method can't be used neither for consolidation, nor for purification of contamined soils, sludges or sediments, i.e. for purification of contaminated solids.

The related known solution of the problem is the method for preparing an active absorbing material (EP 0337 047 A1). This material is produced by roasting of alumino-silicates at moderate temperatures between 350 and 800°C using a static oxidising (air or oxygen) atmosphere. Final contents of residual mineral coal admixtures (including dolomites or slaty materials) in these thermally modified alumino-silicates are min. 17 wt %. Formaldehyde-urea or an aqueous suspension of another appropriate binder (e.g. 10 wt % of cement) is then continuously added in small amounts to the fine burned aluminosilicates. An adsorbent commercially known as "Beringite can be prepared by this method. Altered Westphalian schists which are used as the raw-materials for producing this adsorbent undergo severe changes after being heated up to 800°C - most of minerals are converted to a, so called, X-ray amorphous phase. Active components of this class of adsorbents are products of thermal decomposition of carbonates such as calcite, dolomite and siderite. The adsorbent is usually applied in two forms: coarse (grain size about 1 to 2 mm) and fine (grain size minus 1 mm - so called "aqueous Beringite"). Very fine adsorbent (grain size minus 0.25 mm - so called "soil Beringite") is used for remediation of soils. Chemical reactions such as neutralisation and precipitation play the key role in removing and/or immobilisation of cations of the heavy metals using "Beringite" adsorbent.

Also a method for producing an improved "Beringite is available in the literature (EP 0455 621 A1). Values of the sorption coefficient of a schistous material containing alumino-silicates can be increased by the addition of cement as a binder and/or aluminium metal powder or aqueous suspension containing aluminium, by the addition of hydroxides to the mixture to adjust the pH value between 10 and 14, and by hydrothermal processing at temperatures 70 to 120°C during several hours. Alternatively, a certain amount of aqueous solution of sodium silicate can be added. Improved Beringite can be used in industrial applications as a material for the filter body (matrix) for filtration of contaminated waters in amounts from 1,500 up to 1,800 the body volumes ($V/V_0$), reaching the standards of purity.

All above mentioned non-composite sorbing materials are selective and can be applied only as additives. They are not suitable to be used simultaneously as active components and as granular, filter body (matrix) forming material carriers in purification of contaminated liquids, and as pulverised additives for immobilisation of cations of metals in solids.

Main disadvantages of sorbents of Beringite type are as follows: schistous (slaty) raw-materials are not commonly available and they must be thermally treated at temperatures up to 600 or 800 °C to increase their specific surface as well as their buffering capacity, what results in serious technical and energetic requirements. Also additions of various special components, e.g. aluminium metal, sodium silicate or calcium hydroxide have to be used and the mixture must be consequently processed hydrothermally to reach higher efficiency of removal of cations of the heavy metals. Serious technical and economical requirements make this method disadvantageous for producing the sorbent.

The most related known solutions of the problem is the method for preparing an active absorbing material as are described in following documents:

☐ Database WPI, Class D15, AN 1988-087150, XP-002122616 & JP-A-06 07732, SHINKO KOGYO KK (further only D1) and

☐ DE 36 24 300 A , METALLGESELLSCHAFT AG (further only D2).

Document D1 discloses a sorbent for removing phosphate(s)or heavy metal ions $Hg^{2+}$, $Zn^{2+}$, $Cu^{+2}$, $Cd^{2+}$, $Ni^{2+}$, or $Cr^{2+}$ from water, which is prepared by mixing (a) coral reef limestone, (b) dolomite and (c) inorganic binder in proportion 10-90 wt.% (a), 90 -10 wt.% (b), and 1-10 wt.% (c). The mixture is then moulding and finally firing (burned) at temperatures from a wide range 500-800°C.

The raw-materials for the sorbent preparation proposed in D1 (i.e. coral reef limestone, dolomite and a inorganic binder) are mixed together in a defined proportion by weight Both, limestone and dolomite represent an active component of the sorbent and their total content in the sorbent is 90-99 wt.%. An inorganic binder (representing 1-10 wt.%) is added to bond individual grains of the active component together.

As far as the solution according to D2 is concerned, the sorbent is developed for sorption of gaseous phase and is not applicable for purification of liquids. The final sorbent in the form of pellets is characterised by a high content of lime (CaO) as there is used burning temperature of <800-900 °C>, over internal (iii). Lime is dissolved in liquid under dynamic flow conditions and a slurry which is formed can choke the filter bed.

Disclosure of the invention

Disadvantages of all known methods discussed in previous paragraphs can be in a great extent eliminated using the solution according to this invention. It is relating to a composite sorbent for removing and immobilisation of heavy metals and/or phosphates in contaminated liquid and solid phases. A granular composite sorbent according to this invention is prepared by mixing a body forming component - (carrier) related on its origin to natural schists and/or wastes from coal dressing, with an active component - semi-calcined dolomites with high contents of $MgO.CaCO_3$ obtained by burning of a natural dolomite to the first stage at temperatures 750±30°C and a binding agent ( binder) in the mass ratio = (1.3 to 4.3):(1.0 to 1;3):(1.0 to 1.5). A mixture prepared by this way is further processed by physico-mechanical methods to obtain a composite sorbent with defined grain size for various applications in purification of contaminated solids or liquids.

The method for producing a composite sorbent according to this invention is characterised by mixing natural schists and/or wastes from coal dressing, representing the carrying component (carrier), with semi-calcined dolomites with high contents of MgO.CaCO$_3$ obtained by burning of a natural dolomite to the first stage at temperatures 750±30°C, representing the active component First of all, these two major components are crushed and/or milled individually or together to reach a grain size minus 0.2. mm. In a further step, a binding agent ( binder) is added to this originally two-component mixture in an appropriate amount, to reach the mass ratio the carrier : the active component: the binder = (1.3 to 4.3):(1.0 to 1.3):(1.0 to 1.5). Consequently, a water is added in the ratio S : L = 1: (0.38 to 0.60) and a mass of paste-like consistency (so called cement mortar) is prepared. After a short setting period and 10 days of ageing, the hardened cement mortar is crushed and/or milled and sorted to fractions with defined grain size for various applications in purification of contaminated solids or liquids.

The most important raw-materials for producing the body forming component (carrier) of the sorbent include various natural schistous raw-materials such as sericitic chlorite schists or black shales (e.g. those of upper triassic age of Reingraaben type or from Mariathaal deposit), or tails from coal washing and/or dressing which are available at waste disposal sites, or combinations of these raw-materials. Alternatively, also other natural materials such as tuffs, sandstones, clays, kaolines or diatomites, or their combinations can be used for the latter purpose.

As an active component for preparing the sorbent according to this invention, thermally modified (calcined) dolomite prepared by burning of natural dolomites to the first stage at temperatures about 720 to 750 °C using static conditions can be preferably applied. Alternatively, also a calcined dolomite prepared by burning of natural dolomites at temperatures about 750 to 780 °C using dynamic conditions can be used.

As a binding agent for preparing the sorbent according to this invention, a portland cement (PC) - preferably a white one is used.

The sorbent according to this invention in its final form can be obtained by crushing and/or milling of the hardened cement mortar, followed by sorting the crushed/milled material to fractions with defined grain size - preferably = (1.0 to 3.0), (0.3 to 1.0) and (0.0 to 0.3) mm - for various applications in purification of contaminated solids or liquids.

When the sorbent according to this invention is applied to remove and immobilise cations of the heavy metals and/or phosphates from a contaminated liquid phase, the sorbent is used as a filter body (matrix) with a contaminated liquid phase passing through it Certain amounts of this sorbent with defined grain size can be also added to a contaminated liquid phase into the settling tanks before the filtration.

When the composite sorbent according to this invention is applied to immobilise cations of the heavy metals and/or phosphates in a contaminated solid phase ( i.e. soils), certain amount of a pulverised sorbent is mixed with a contaminated solid before its disposal to limit possible washing-out of hazardous species specified above at a waste disposal site.

Examples of carrying out the invention

The raw materials for producing the sorbent have been chosen after analysing the results of preliminary tests and belong to one of the following groups:

• the raw-materials which are a source of an "active component" of the sorbent;

• the raw-materials offering the body forming component, i.e. the carrier (so called skeleton or matrix) of the sorbent; and

• binding agents used to keep both major components specified above together.

This invention is relating to a non-thermal method for preparing a composite sorbent. The method according to this invention assumes the addition of such a binding agent to the mixture of the body forming ( carrier) and active components, which can ensure an appropriate strength of both dry and wet sorbent, and which can bring a synergetic effect resulting in an improved functioning of active components.

In examples presented in this invention, schistous natural materials and waste materials from coal-dressing were used as major raw-materials for preparing the body forming component. Schists from the Slovak deposits in Ráztoka, Mariánka and Hnilèík were used as well as a solid waste material from coal washing and dressing, coming from a waste disposal site in Handlová, Slovakia. Though the latter one being different in nature, it contains tuffitic-clayey and organic components, and can be alternatively used instead of schists for producing of the carrying component of the sorbent according to this invention.

Semi-calcined dolomite from Hubina deposit, Slovakia was used as an active component, because it offered the best results. Semi-calcined dolomite (SCD) can be prepared by burning of natural dolomite to the first stage at temperatures 750±30°C. SCD with grain size about 2 to 11 mm obtained by this method is of high purity and its typical mineralogical composition is as follows: calcite (CaCO$_3$) = approx. 70 %, periclase (MgO) = 28 %, residual dolomite = 1 % and less than 1% of silicates (coming mostly from schists, quartz and feldspar, and containing $SiO_2$, $Al_2O_3$, $Fe_2O_3$, etc.). Calcite and residual dolomite contents were determined by manometric analysis of milled product SCD with grain size 2 to 11 mm was consequently crushed, milled and screened (3-stage crusher, vibrating mill, vibrating screen) to a grain size minus 0.2 mm, and this final material has been used for producing the composite sorbent.

Black shales, namely those of "Lunz type (BS) seem to be - according to their simple mechanical treatment (milling), relatively low content of the heavy metals and an appropriate content of organic compounds - the best raw-materials for producing of the carrying component. Bulk density of the wet and dry rock is approx. 2,545 $kg.m^{-3}$ and 2,050 $kg.m^{-3}$, respectively.

Portland cement has been used as a binding agent for preparing the composite sorbent by method according to this invention. Along with its binding effect, portland cement also partially acts as an active component (due to calcium silicates, calcium aluminates and/or small amounts of free lime present). Generally, it is possible to use any portland cement of grade equal to 350 or more. However, white cement is preferably used, because it is ecologically more acceptable and neither chromium nor other heavy metals are present in amounts typical for ordinary portland cements. White portland cement (PC) produced by Hirocem Roho□ník, Slovakia was used in examples presented in this invention.

Mineralogical and chemical composition of the raw-materials specified above was determined using methods of X-ray diffraction and chemical analyses. The results are summarised in Tables 1, 2 and 3.

Table 1:

| Chemical and mineralogical composition of the used active component (semi-calcined dolomite) | | | | | |
|---|---|---|---|---|---|
| Chemical component | Content (wt. %) | | Mineralogical component | Content (wt. %) | |
| | min. | max. | | min. | max. |
| CaO | 36.34 | 44.81 | Calcite ($CaCO_3$) | 63.7 | 73.6 |
| MgO | 24.43 | 28.71 | Dolomite | | |
| $SiO_2$ | 0.08 | 0.64 | ($Ca CO_3.MgCO_3$) | 1.0 | 8.0 |
| $Al_2O_3$ | 0.05 | 0.44 | Periclase (MgO free) | 16.7 | 27.7 |
| $Fe_2O_3$ | 0.03 | 0.30 | CaO free | 0.56 | 1.00 |
| $TiO_2$ | 0.01 | 0.03 | Impurities / Silicates | 0.20 | 1.50 |
| CaO free | 0.56 | 0.88 | | | |
| L.O.I. | 31.55 | 37.44 | | | |

Table 2:

| Chemical and mineralogical composition of the raw-materials used for preparing the body forming component (carrier) | | | | | |
|---|---|---|---|---|---|
| Chemical component | Content | (wt. %) | Mineralogical component | Content (wt. %) | |
| | min. | max. | | min. | max. |
| $SiO_2$ | 55.31 | 63.97 | Sericite | 7 | 52 |
| $Al_2O_3$ | 15.66 | 19.52 | Chlorite/ Smectite | 9 | 44 |
| $Fe_2O_3$ | 7.43 | 10.77 | Quartz | 6 | 42 |
| $TiO_2$ | 0.60 | 0.92 | Plagioclase | 1 | 12 |
| CaO | 0.37 | 3.49 | Caldte | 0 | 3 |
| MgO | 1.46 | 2.90 | Dolomite | 0 | 5 |
| MnO | 0.078 | 0.251 | Cristoballite | 0 | 5 |
| $Na_2O$ | 0.12 | 1.24 | Kaolinite | 0 | 4 |
| $K_2O$ | 1.79 | 5.13 | Organic species | 0 | 4 |
| S total ($SO_3$) | 0.05 | 1.98 | Pyrite | 0 | 1 |
| C total | 0.44 | 4.23 | Fe oxides | 0 | 1 |
| C org. | 0.08 | 3.52 | X-ray amorphous | | |
| L.O.I. | 3.72 | 12.87 | phase(volcanic ash) | 0 | 23 |
| $H_2O$ | 0.45 | 3.96 | | | |

Table 3:

| Chemical and mineralogical composition of the used binding agent (white portland cement) | | | | | |
|---|---|---|---|---|---|
| Chemical component | Content (wt. %) | | Mineralogical component | Content (wt. %) | |
| | min. | max. | | min. | max. |
| $SiO_2$ | 16 | 26 | $C_3S$ (allite) | 35 | 73 |
| $Al_2O_3$ | 4 | 8 | $C_2S$ (bellite) | 2 | 36 |
| $Fe_2O_3$ | 0.5 | 5 | $C_3A$ | 7 | 15 |
| CaO | 58 | 67 | $C_4AF$ | 0.5 | 14 |
| MgO | 1 | 5 | CaO free | 0 | 1 |
| | | | $CaSO_4$ | 0.2 | 5 |

In the examples presented in the invention, two different mixtures of major components (Mixture 1 and Mixture 2) were used for preparing the granular composite sorbent. The composition of Mixture 1 and Mixture 2 was as follows:

Mixture 1 = BS (50 %) + PC (30 %) + SCD (20 %),

Mixture 2 = CH (50 %) + PC (30 %) + SCD (20 %),

where:

BS = black shales;
CH = waste material from brown Handlová coal dressing;
PC = (white) portland cement;
SCD = semi-calcined dolomite; and
Figures in brackets correspond to contents of individual components in wt. %.

Example 1

In this example, the sorbent according to this invention was prepared, using various kinds of raw-materials. Individual raw-materials were treated separately: they were crushed using a three-stage crusher, milled in a vibrating mill and screened on a vibrating screen, and major components with grains smaller than 0.2 mm were obtained. To prepare Mixture 1, BS and SCD were mixed together and then white portland cement (PC) was added to this two-component mixture. Mixture 2 was prepared in the same way, just CH - instead of BS - was used. By adding water to each of the three-component mixtures of solid raw-materials in amounts corresponding to the mass solid : water ratio (S : L) = 1.25 to 2.0, mass of a paste-like consistency, so called cement mortar, was prepared. This cement mortar was moulded by various methods to prepare briquettes, bricks (shaped bodies) or pellets. These were, during further period of ageing (7 days), periodically sprayed with water. After setting, hardening and drying, the materials were crushed in 2 or 3 stages and screened, and three kinds of grains - 1 to 2.5 mm, 0.3 to 1 mm and below 0.3 mm - were prepared for Mixture 1 and Mixture 2. Since the same crusher and screen were applied, the grain size distributions of Mixture 1 and Mixture 2 were rather similar - Table 4. Chemical and mineralogical composition of both mixtures are summarised in Table 5.

Table 4:

| Grading of the used sorbent | | |
|---|---|---|
| Grain size (mm) | Grain content in the sorbent (wt. %) | |
| | Mixture 1 | Mixture 2 |
| 1.0 - 2.5 | 39.62 - 41.08 | 42.30 - 47.12 |
| 0.3 - 1.0 | 19.38 - 19.88 | 23.50 - 24.90 |
| 0.0 - 0.3 | 39.04 - 27.98 | 34.20 - 27.98 |

Table 4: (continued)

| Grading of the used sorbent | | |
|---|---|---|
| Grain size (mm) | Grain content in the sorbent (wt. %) | |
| | Mixture 1 | Mixture 2 |
| Note: For purification of contaminated aqueous phase in dynamic conditions, also screens with hole diameter 0.25, 0.315 or 0.35 mm - instead of 0.3 mm - can be used for screening of the sorbent, according to the nature of the filter body (matrix) applied. | | |

Table 5:

| Mineralogical composition of the used composite sorbent | | | | | | |
|---|---|---|---|---|---|---|
| Mineralogical component (phase) | Phase content (wt. %) | | | | | |
| | Mixture 1 (grain size in mm) | | | Mixture 2 (grain size in mm) | | |
| | 1.0 - 2.5 | 0.3 - 1.0 | 0.0 - 0.3 | 1.0 - 2.5 | 0.3 - 1.0 | 0.0 - 0.3 |
| Fylosilicates*) | 34 | 31 | 29 | 29 | 29 | 29 |
| $Ca_3SiO_5$, $Ca_2SiO_4$, $CaAl_2O_4$ | 30 | 30 | 30 | 30 | 30 | 30 |
| Quartz ($SiO_2$) | 13 | 14 | 15 | 5 | 5 | 5 |
| Calcite ($CaCO_3$) | 13 | 14 | 15 | 17 | 17 | 17 |
| MgO | 5 | 6 | 6 | 6 | 6 | 6 |
| Plagioclase | 4 | 4 | 4 | 3 | 3 | 3 |
| Dolomite ($CaCO_3.MgCO_3$) | <1 | <1 | <1 | <1 | <1 | <1 |
| Volcanic tuff | - | - | - | 9 | 9 | 9 |
| Free oxides ($Fe_2O_3$) | + | + | + | + | + | + |
| Free CaO | + | + | + | + | + | + |
| Organic phase | + | + | + | <1 | <1 | <1 |

Explanations to Table 5:

*) Phylosilicates = chlorite + sericite + illite (Mixture 1) or montmorillonite + sericite + illite + calcite (Mixture 2);

"+" = stands for traces up to 0.X % mineral content;

Volcanic tuff = amorphous phase of volcanic origin (volcanic glass, ash, etc.);

Organic phase = finely distributed organic carbon and organic species (Mixture 1), or finely distributed coal and related organic components (Mixture 2).

Properties of the sorbent according to this invention are specified in more details in the following examples (Examples 2 to 4). Methods for preparing the sorbent and its applications for removing and fixation of the heavy metals from model solutions of copper ($Cu^{2+}$), zinc ($Zn^{2+}$), lead ($Pb^{2+}$), cadmium ($Cd^{2+}$), mercury ($Hg^{2+}$), iron ($Fe^{3+}$), manganese ($Mn^{2+}$) and phosphates ($PO_4^{3-}$) in static and dynamic conditions are presented; results of tests carried out in static conditions are summarised in Table 6.

It can be also seen from Table 6 that samples of the composite sorbent with additions of natural zeolite into Mixture 1 were tested for their ability to remove ammonium cations ($NH_4^+$) from contaminated solutions.

Table 6:

| Removal of individual ions from model contaminated solutions by using selected samples of the sorbent and a comparative sample of Beringite in static conditions | | | | | | | | | | |
|---|---|---|---|---|---|---|---|---|---|---|
| Contaminated Solution | | Effectiveness of ion removal (%) | | | | | | | | |
| | | Mixture 1 | | | Mixture 2 | | | Sample of Beringite | | |
| Ion | conc. mg/l | (grain size in mm) | | | (grain size in mm) | | | aqueous | aqueous | soil |
| | | 1.0 - 2.5 | 0.3 - 1.0 | 0.0 - 0.3 | 1.0 - 2.5 | 0.3 - 1.0 | 0.0 - 0.3 | 1-2 mm | - 1 mm | -0.3 mm |
| $Cu^{2+}$ | 10.52 | 99.90 | 99.88 | 99.90 | - | 99.80 | 99.90 | 61.69 | 93.40 | 98.00 |
| | 18.09 | 99.79 | 99.88 | - | 99.78 | 99.83 | - | 46.75 | - | - |
| | 48.42 | 98.69 | 99.73 | - | 96.21 | 99.91 | - | 36.56 | - | - |
| $Zn^{2+}$ | 10.98 | 99.70 | 99.60 | 99.90 | 99.50 | 98.80 | 99.90 | 25.07 | 55.70 | 71.80 |
| | 22.30 | 99.70 | 99.64 | - | 99.24 | 99.73 | - | 22.95 | - | - |
| | 59.17 | 66.64 | 99.85 | - | 57.46 | 88.05 | - | 11.18 | - | - |
| $Pb^{2+}$ | 10.02 | 98.63 | 95.56 | 99.26 | 99.27 | 98.99 | 99.25 | 96.28 | 91.08 | 99.18 |
| $Cd^{2+}$ | 6.46 | 98.96 | 99.47 | 99.38 | 90.97 | 96.70 | 99.19 | 35.35 | 64.83 | 81.73 |
| $Hg^{2+}$ | 3.00 | 46.33 | 56.00 | 70.67 | 36.67 | 43.33 | 70.00 | 30.33 | 42.67 | 45.67 |
| $Fe^{3+}$ | 9.46 | 97.67 | 99.05 | 99.15 | 99.36 | 98.41 | 97.15 | 98.73 | 98.52 | 99.47 |
| $Mn^{2+}$ | 14.34 | 99.51 | 99.93 | 99.65 | 51.53 | 99.58 | 95.75 | 16.81 | 24.75 | 30.96 |
| $PO_4^{3-}$ | 9.70 | 99.59 | 99.69 | 99.07 | 99.90 | 98.35 | 99.90 | - | - | - |
| $NH_4^+$ | 10.96 | 19.07 | 31.11 | 37.50 | - | - | - | - | - | - |
| Note: A modified sorbent according to this invention was used for testing its ability to remove ammonium cations ($NH_4^+$). For its preparation, a part (20 %) of black shales (BS) was substituted by natural zeolite. | | | | | | | | | | |

Example 2

In this example, the composite sorbent according to this invention with grain size 1.0 to 3.0 mm was prepared. Its composition (in wt. %) was as follows: black shales (BS) 50 %, white portland cement (PC) 30 %, thermally modified dolomite (SCD) 20%. Water in amounts corresponding to the ratio S: L = 1.25 was added to prepare a cement mortar. After a certain ageing period (about 7 days), hardened dry mass was crushed and screened to three fractions. In further experiment, 15 ml of composite sorbent with a grain size about 1.0 to 3.0 mm were used as the filter body (matrix). A model solution with $Cu^{2+}$ concentration 9 mg.l$^{-1}$ has been passed up-stream through a column; an average rate it was passing the filter body (matrix) was 2.76 m.h$^{-1}$. For a total amount of purified solution $V/V_0$ = 267 (filter body volumes = $V_0$) the effectiveness of $Cu^{2+}$ ions removal was 97 rel. %. Concentration of $Cu^{2+}$ ions in a purified solution was found to be 0.29 mg.l$^{-1}$. An average filter load was 18 $V/V_0$.h$^{-1}$ - this corresponds to the value 2.76 m$^3$.m$^{-2}$.h$^{-1}$.

Example 3

In this example, the composite sorbent was prepared by the same method as in Example 2. The only difference was, that 50 % of a dry waste material from brown Handlová coal dressing (CH) - instead of black shales - has been used as a carrier. As in the previous example, the carrier was mixed together with 30 % of portland cement (PC) as a binder and 20% of thermally modified dolomite (SCD) as an active component Water in amounts corresponding to the ratio S : L = 2.0 was added to obtain a cement mortar. After setting and hardening (cca 10 days), dry mass was crushed and screened, and a composite sorbent with grain size about 1.0 to 3.0 mm was prepared for further tests; in each of them 15 ml of this sorbent were used as a filter body. Model solution with $Cu^{2+}$ concentration 8.7 mg.l$^{-1}$ has been passed up-stream through a column. For a total amount of a purified solution $V/V_0$ = 267, concentration of $Cu^{2+}$ ions in a purified solution was 0.106 mg.l$^{-1}$. The effectiveness of $Cu^{2+}$ ions removal was found to be 98.8 rel. % at an average filter load 12 $V/V_0$ .h$^{-1}$, corresponding to the value 1.84 m$^3$.m$^{-2}$.h$^{-1}$.

Example 4

Sorbent according to this invention and a solution with content of $PO_4^{3-}$ ions were mixed together in static (batch) conditions in a ratio 1 g of the sorbent per 1000 ml of solution. Both phases were agitated for 60 min. and consequently separated by filtration. It was found out that concentration of $PO_4^{3-}$ ions decreased from its initial value 9.7 mg.l$^{-1}$ to a final one 0.01 to 0.16 mg.l$^{-1}$, and values of the effectiveness of $PO_4^{3-}$ ions removal from 98.3 to 99.9 rel. % have been reached.

Example 5

A sorbent according to this invention and model solutions with concentrations of $Cu^{2+}$ ions between 10.52 and 91.68 mg.l$^{-1}$ were mixed together in static (batch) conditions in a ratio 1 g of the sorbent per 1000 ml of solution. Both phases were agitated for 60 min. and consequently separated by filtration. Contents of $Cu^{2+}$ in purified solutions were found to be 0.103 to 16.227 mg.l$^{-1}$ $Cu^{2+}$, in dependence of an initial value of the $Cu^{2+}$ concentration, i.e. the content of $Cu^{2+}$ ions in purified solutions has been reduced by 99.02 to 82.3 rel. %. In some comparative tests carried out in the same conditions with Beringite, typical values *of* the effectiveness of $Cu^{2+}$ ions removal between 61.69 and 22.02 rel. % were reached.

Example 6

Tests were carried out with model solutions containing zinc. Initial concentrations of $Zn^{2+}$ ions varied from 10.90 to 105.40 mg.l$^{-1}$ and these solutions were treated in the same way as those in the previous example, using sorbent according to this invention. It was found out that contents of $Zn^{2+}$ ions in purified solutions were reduced by 99.42 to 60.92 rel. %., with values of the $Zn^{2+}$ concentration in purified solutions being inversely proportional to the initial ones.

Example 7

A set of comparative tests was carried out in this experiment to compare:

•   effects of the method used for preparing the sorbent on absorbing capacity of the sorbent; and

•   the sorbent according to this invention with an absorbent of Beringite type.

A composite sorbent with composition according to this invention was prepared in two forms: as pellets (form A) and granules (form B).
Sorbent A with pellet size 0.2 to 5 mm was prepared from a mixture containing 50 % of a carrier (BS and/or CH), 30 % of a portland cement (PC) and 20 % of a semi-calcined dolomite (SCD). First of all, dry mixture of raw-materials was finely sprayed with a water to prepare wet pellets. After setting and hardening (cca 5 days), the pellets were ready for further application.
Sorbent B in a granular form according to this invention was prepared from a mixture containing 50 % of a carrier (BS and/or CH), 30 % of a portland cement (PC) and 20 % of a semi-calcined dolomite (SCD). A granular material with defined grain size was obtained by consequent crushing of these raw-materials and mixing them together, and by the addition a certain amount of a water to the dry mixture to obtain a cement mortar, which was crushed after ageing, and screened. A composite sorbent with typical grain size about 1.0 to 2.5 mm was prepared by this method.
Samples of individual sorbents were used for purification of model solutions with content of a copper and zinc in static (batch) conditions - the results are summarised in Table 7. These results can be compared with those reached by using a comparative sample of the Beringite with grain size 1 to 2 mm (so called "aqueous Beringite" prepared from alumino-silicates by thermal methods).

Table 7:

| Removal of $Cu^{2+}$ or $Zn^{2+}$ ions from contaminated model solutions by using samples of the sorbent (both forms A and B) and a comparative sample of Beringite in static conditions | | | | | | | | |
|---|---|---|---|---|---|---|---|---|
| Sorbent | Initial concentration of $Cu^{2+}$ (mg.l$^{-1}$) | | | | Initial concentration of $Zn^{2+}$ (mg.l$^{-1}$) | | | |
| | 10.52 | 19.40 | 47.04 | 91.68 | 10.90 | 20.35 | 50.64 | 105.40 |
| | Effectiveness of $Cu^{2+}$ removal (%) | | | | Effectiveness of $Zn^{2+}$ removal (%) | | | |
| form A | 93.62 | 47.27 | 39.05 | 25.75 | 45.15 | 38.87 | 19.59 | 15.19 |
| form B | 99.02 | 98.71 | 98.43 | 82.30 | 99.42 | 98.17 | 96.60 | 60.92 |
| Beringite | 61.69 | 46.75 | 36.56 | 22.02 | 25.07 | 22.95 | 11.18 | 10.01 |

Highest values of the effectiveness of $Cu^{2+}$ and $Za^{2+}$ ions removal (99 to 60 reL %) were reached in those tests, where samples of the granular sorbent according to this invention (form B) were used. The values for $Zn^{2+}$ ions were in all cases higher than corresponding values reached with form A of the sorbent (45 to 15 rel %), and much higher when compared with those reached with the Beringite absorbent

For comparison, values of the effectiveness of $Zn^{2+}$ ions removal for the Beringite absorbent were found to be only 25 to 10 rel. % in the same experimental conditions.

Average values of effectiveness of the filter body prepared from the sorbent according to this invention and used in dynamic conditions were 97 and 99 rel. % at lower and higher flow rates, respectively.

Example 8

The sorbent according to Example 1 was tested for applications in purification of actual contaminated aqueous solutions. The sorbent was used as a filter body in a continuous flow system. An actual waste solution from a plating shop doped with certain amounts of Cu and Pb salts, with chemical composition shown in Table 8, was used in this experiment.

Table 8:

| Concentrations of the heavy metals in used waste solution | |
|---|---|
| Ion | Concentration (mg.l$^{-1}$) |
| $Zn^{2+}$ | 9.11 |
| $Cu^{2+}$ | 7.20 |
| $Pb^{2+}$ | 10.14 |

These tests were carried out using 400 mm long and 30 mm in dia. glass columns with filtering cloth (type LN 61) and settling tanks with volume 3 litres. Contaminated solution was pumped by a rotary pump up the top of a down-stream column and passed down in direction to the filtering cloth. Filter load was 15 $V/V_0$.hod$^{-1}$. The filter was regenerated each 30 min. by an up-stream washing and values up to 770 $V/V_0$.hod$^{-1}$ were reached with the same filter body (matrix), i.e. without any change of the sorbent. Using a periodic regeneration of the filter body (matrix) by washing, mechanical life times of order 1,500 $V/V_0$ can be expected for this kind of granular sorbent. It was observed, that pH values of used solutions were from an interval between 12.8 and 8.7.

The results documenting possibility of purification of such a waste solution by using the sorbent according to this invention in dynamic conditions are summarised in Table 9.

Table 9:

| Purification of a waste solution from a plating shop in dynamic conditions | | | | | | |
|---|---|---|---|---|---|---|
| Solution flow rate (filter body volumes, $V/V_0$) | Effectiveness of metal removal (%) | | | | | |
| | Sorbent prepared from Mixture 1; fractions 1.0-2.5 and 0.3-1.0 mm used | | | Sorbent prepared from Mixture 2; fractions 1.0-2.5 and 0.3-1.0 mm used | | |
| | Zn | Cu | Pb | Zn | Cu | Pb |
| 100 | 99.4 | 99.6 | 98.2 | 993 | 99.8 | 99.1 |
| 300 | 99.4 | 99.7 | 99.1 | 99.1 | 99.7 | 99.0 |
| 500 | 983 | 99.1 | 98.2 | 98.4 | 99.1 | 99.0 |
| 600 | 98.1 | 98.6 | 97.1 | 98.0 | 98.2 | 98.1 |
| 700 | 97.6 | 98.1 | 96.1 | 97.1 | 97.9 | 97.5 |
| 770 | 97.4 | 98.1 | 95.9 | 96.8 | 96.5 | 96.3 |

Industrial utilisation of the invention

A composite sorbent produced according to this invention can be used for removal and immobilisation of the heavy metals and/or phosphates both in liquids and solids. The following examples can be used to illustrate typical applications of this sorbent:

1. material for use as the filter body (matrix) with grain size 1.0 to 3.0 mm, occasionally also 0.3 to 1.0 mm, for purification and final cleaning of contaminated waste waters from cations of the heavy metals and/or phosphates in dynamic conditions;

2. pulverised additive with grain size less than 0.3 mm for purification and final cleaning of contaminated waste waters from cations of the heavy metals and/or phosphates, which can be consequently separated from a purified aqueous phase in two stages: (i) by sedimentation or, occasionally, by flocculation and sedimentation in settling tanks, and (ii) by filtration, using a mechanical filter (e.g. a sand filter);

3. an additive, mostly in a powdered form, with grain size less than 0.3 mm for immobilisation of cations of the heavy metals and/or phosphates in contaminated soils, sediments and solid wastes (sludges), which can limit washing-out of these hazardous species from the above mentioned contaminated solids.

However, these examples do not limit other possible applications of the sorbent according to this invention.

**Claims**

1. Method for producing a composite sorbent for removing and immobilisation of cations of the heavy metals and/or phosphates in contaminated solids and/or liquids **characterised in that** a gradual (consequent or simultaneous) crushing and/or milling of a CARRIER of schistous nature and/or wastes from coal preparation, and an ACTIVE COMPONENT is semi-calcined dolomite with a high content of $MgO.CaCO_3$ obtained by burning of a natural dolomite to the first stage at temperatures $750\pm30°C$, to the grain size less than 0.2 mm; are mixing together; then are adding a cement-type binder to prepare a three-component mixture with a composition defined by the mass ratio (carrier) : (active component) : (binder) = (1.3 to 4.3) : (1.0 to 1.3) : (1.0 to 1.5); adding water to prepare a cement mortar with a composition given by the mass ratio (solids) : (water) = (1):(0.38 to 0.60); crushing the dried cement mortar after its setting and hardening within 3 to 10 days, and sorting crushed material into fractions with defined grain's size, according to assumed applications of the sorbent for purification of contaminated solids or liquids.

2. Method for producing the sorbent according to claim 1 **characterised in that** using sericitic chlorite schists or black shales (e.g. those of upper triassic age of Reingraaben type) or from Mariathaal deposit) and/or tails from coal washing or preparation which are available at waste disposal sites, or combinations of these materials as raw-materials for preparing a carrier of the sorbent.

3. Method for producing the sorbent according to claim 1 **characterised in that** using tuffs, sandstones, clays, kaolines or diatomites, or combinations of these materials as raw-materials for preparing the carrier of the sorbent.

4. Method for producing the sorbent according to claim 1 **characterised in that** using semi-calcined dolomite obtained by burning of a natural dolomite to the first stage at temperatures 750±30°C in either static or dynamic conditions - as an active component of the sorbent.

5. Method for producing the sorbent according to claim 1 **characterised in that** using portland cement, preferably white portland cement, as a cement-type binder .

6. Method for producing the sorbent according to claims 1 to 5 **characterised in that** sorting crushed hardened cement mortar into, at least, three fractions, namely (1.0 to 3.0), (0.3 to 1.0) and (0.0 to 0.3) mm.

7. Sorbent for removing and immobilisation of the heavy metals and/or phosphates in contaminated liquids or solids **characterised in that** a method for its producing according to the previous claims, was prepared as a composite granular material consisting of :

   ➢ a carrier (body forming) component of schistous nature and/or the wastes from coal preparation,

   ➢ an active component is semi-calcined dolomite with a high content of $MgO.CaCO_3$ obtained by burning of a natural dolomite to the first stage at temperatures 750±30°C, and

   ➢ a cement- type binder preferably white portland cement,

   where the main components and agent are In the defined mass ratio: (carrier) : (active component) : (binder) = (1.3 to 4.3) : (1.0 to 1.3) : (1.0 to 1.5), with defined grain's size, according to assumed applications of the sorbent for purification of contaminated solids or liquids.

8. Method for removing and immobilisation of the heavy metals and/or phosphates in contaminated liquids **characterised in that** using the sorbent according to claim 7 in defined grain's size of (1.0 to 3.0) mm and/or (0.3 to 1.0) mm as a filter body (matrix material) in dynamic systems.

9. Method for removing and immobilisation of the heavy metals and/or phosphates in contaminated liquids **characterised in that** using the sorbent according to claim 7 in a powdered form with the defined grain's size minus 0.3 mm as an additive to contaminated solutions, which can be consequently separated from the liquid phase by sedimentation, occasionally by flocculation and sedimentation in settling tanks before the final stage of water cleaning by filtration using a mechanical filter.

10. Method for removing and immobilisation of the heavy metals and/or phosphates in contaminated solids **characterised in that** using the sorbent according to claim 7 in a powdered form with the defined grain's size mostly minus 0.3 mm as an additive to contaminated soils, sediments or solid wastes (sludges), which is mixed with contaminated solid phase before its disposal.

**Patentansprüche**

1. Verfahren zur Herstellung eines Verbundstoff-Sorptionsmittels zur Entfernung und Immobilisierung von Kationen der Schwermetalle und/oder Phosphaten in kontaminierten Feststoffen und/oder Flüssigkeiten,
   **dadurch gekennzeichnet,**
   **daß** eine graduelle (aufeinanderfolgende oder gleichzeitige) Zerkleinerung und/oder Mahlung einer TRÄGERSUBSTANZ von schieferiger Natur und/oder aus Abfällen der Kohleaufbereitung und einer AKTIVEN KOMPONENTE, die semi-kalzinierter Dolomit mit einem hohen Gehalt an $MgO.CaCO_3$ ist, der durch Brennen eines natürlichen Dolomits bis zur ersten Stufe bei Temperaturen von 750±30°C erhalten wird, bis zu einer Korngröße von weniger als 0,2 mm erfolgt;

diese zusammengemischt werden;

dann ein zementartiges Bindemittel zugesetzt wird, um eine Dreikomponenten-Mischung mit einer Zusammensetzung herzustellen, die durch das Massenverhältnis: (Trägersubstanz):(aktive Komponente):(Bindemittel) = (1,3 bis 4,3):(1,0 bis 1,3):(1,0 bis 1,5) definiert ist;

Wasser zugesetzt wird, um einen Zementmörtel mit einer Zusammensetzung herzustellen, die durch das Massenverhältnis (Feststoffe):(Wasser) = (1):(0,38 bis 0,60) gegeben ist;

der getrocknete Zementmörtel nach seinem Abbinden und Aushärten innerhalb von 3 bis 10 Tagen zerkleinert wird und das zerkleinerte Material in Fraktionen mit definierter Korngröße entsprechend den vorgesehenen Anwendungen des Sorptionsmittels zur Reinigung kontaminierter Feststoffe oder Flüssigkeiten klassifiziert wird.

2. Verfahren zur Herstellung des Sorptionsmittels nach Anspruch 1,
   **dadurch gekennzeichnet,**
   **daß** serizitische Chloritschiefer oder schwarze Schiefer (z.B. solche der Obertrias-Zeit vom Reingraben-Typ oder aus der Marienthaler Lagerstätte) und/oder Waschberge aus der Kohlewäsche oder -aufbereitung, die an Mülldeponien erhältlich sind, oder Kombinationen dieser Materialien als Rohmaterialien zur Herstellung einer Trägersubstanz des Sorptionsmittels verwendet werden.

3. Verfahren zur Herstellung des Sorptionsmittels nach Anspruch 1,
   **dadurch gekennzeichnet,**
   **daß** Tuffe, Sandsteine, Tone, Kaoline oder Diatomite oder Kombinationen dieser Materialien als Rohmaterialien zur Herstellung der Trägersubstanz des Sorptionsmittels verwendet werden.

4. Verfahren zur Herstellung des Sorptionsmittels nach Anspruch 1,
   **dadurch gekennzeichnet,**
   **daß** semi-kalzinierter Dolomit, der durch Brennen eines natürlichen Dolomits bis zur ersten Stufe bei Temperaturen von $750\pm30°C$ unter entweder statischen oder dynamischen Bedingungen erhalten wird, als eine aktive Komponente des Sorptionsmittels verwendet wird.

5. Verfahren zur Herstellung des Sorptionsmittels nach Anspruch 1,
   **dadurch gekennzeichnet,**
   **daß** Portland-Zement, vorzugsweise weißer Portland-Zement, als zementartiges Bindemittel verwendet wird.

6. Verfahren zur Herstellung des Sorptionsmittels nach den Ansprüchen 1 bis 5,
   **dadurch gekennzeichnet,**
   **daß** zerkleinerter ausgehärteter Zementmörtel in wenigstens drei Fraktionen, nämlich (1,0 bis 3,0), (0,3 bis 1,0) und (0,0 bis 0,3) mm, klassifiziert wird.

7. Sorptionsmittel zur Entfernung und Immobilisierung der Schwermetalle und/oder Phosphate in kontaminierten Flüssigkeiten oder Feststoffen,
   **dadurch gekennzeichnet,**
   **daß** ein Verfahren zu seiner Herstellung nach den vorhergehenden Ansprüchen die Herstellung als ein Verbundstoff-Granulat ist, bestehend aus:

   - einer Trägersubstanz-Komponente (körperbildend) von schieferiger Natur und/oder aus Abfällen der Kohleaufbereitung,
   - einer aktiven Komponente, die semi-kalzinierter Dolomit mit einem hohen Gehalt an $MgO.CaCO_3$ ist, der durch Brennen eines natürlichen Dolomits bis zur ersten Stufe bei Temperaturen von $750\pm30°C$ erhalten wird, und
   - einem zementartigen Bindemittel, vorzugsweise weißem Portland-Zement,

   wobei die Hauptkomponenten und das Mittel in dem definierten Massenverhältnis: (Trägersubstanz):(aktiver Komponente):(Bindemittel) = (1,3 bis 4,3):(1,0 bis 1,3):(1,0 bis 1,5) mit definierter Korngröße entsprechend den vorgesehenen Anwendungen des Sorptionsmittels zur Reinigung kontaminierter Feststoffe oder Flüssigkeiten vorliegen.

8. Verfahren zur Entfernung und Immobilisierung der Schwermetalle und/oder Phosphate in kontaminierten Flüssigkeiten,
   **dadurch gekennzeichnet,**
   **daß** das Sorptionsmittel nach Anspruch 7 in definierter Korngröße von (1,0 bis 3,0) mm und/oder (0,3 bis 1,0) mm als Filterkörper (Matrixmaterial) in dynamischen Systemen verwendet wird.

9. Verfahren zur Entfernung und Immobilisierung der Schwermetalle und/oder Phosphate in kontaminierten Flüssigkeiten,

   **dadurch gekennzeichnet,**

   **daß** das Sorptionsmittel nach Anspruch 7 in Pulverform mit der definierten Korngröße von weniger als 0,3 mm als ein Zusatz zu kontaminierten Lösungen verwendet wird, der anschließend vor der Endstufe der Wasserreinigung durch Filtration mittels eines mechanischen Filters durch Sedimentation, gegebenenfalls durch Flockung und Sedimentation, in Absetzbecken von der flüssigen Phase abgetrennt werden kann.

10. Verfahren zur Entfernung und Immobilisierung der Schwermetalle und/oder Phosphate in kontaminierten Feststoffen,

    **dadurch gekennzeichnet,**

    **daß** das Sorptionsmittel nach Anspruch 7 in Pulverform mit der definierten Korngröße von überwiegend weniger als 0,3 mm als ein Zusatz zu kontaminierten Böden, Sedimenten oder festen Abfallstoffen (Schlämmen) verwendet wird, der mit der kontaminierten festen Phase vor deren Entsorgung gemischt wird.

## Revendications

1. Procédé de production d'un sorbant composite destiné à l'élimination et à l'immobilisation de cations des métaux lourds et/ou de phosphates dans des solides et/ou des liquides contaminés, **caractérisé par** un écrasement et/ou un broyage progressif (consécutif ou simultané) d'un SUPPORT de nature chisteuse et/ou de déchets provenant de la préparation du charbon, et d'un COMPOSANT ACTIF qui est une dolomite semi-calcinée présentant une teneur élevée en $MgO.CaCO_3$ obtenue en brûlant une dolomite naturelle au premier stade à des températures de $750 \pm 30°C$, à une taille de grain inférieure à 0,2 mm, qui sont mélangés ensemble, et qui reçoivent ensuite l'ajout d'un liant de type ciment pour préparer un mélange à trois composants présentant une composition définie par le rapport massique (support) : (composant actif) : (liant) = (1,3 à 4,3) : (1,0 à 1,3) : (1,0 à 1,5), de l'eau est ajoutée pour préparer un mortier de ciment présentant une composition donnée par le rapport massique (solides) : (eau) = (1) : (0,38 à 0,60), le mortier de ciment séché est écrasé après sa prise et son durcissement dans les trois à dix jours, et le matériau écrasé est trié en fractions présentant une taille de grain définie, selon les applications supposées du sorbant pour la purification de solides ou de liquides contaminés.

2. Procédé de production du sorbant selon la revendication 1, **caractérisé par** l'utilisation de chloritoschistes séricitiques ou de schistes argileux noirs, (par exemple ceux de l'âge triassique supérieur du type Reingraaben ou provenant du dépôt de Mariathaal) et/ou de rejets provenant du lavage ou de la préparation du charbon qui sont disponibles aux sites de rejets des déchets, ou de combinaisons de ces matériaux en tant que matières premières pour préparer un support du sorbant.

3. Procédé de production du sorbant selon la revendication 1, **caractérisé par** l'utilisation de tufs, de grès, d'argiles, de caolins, ou de diatomites, ou de combinaisons de ces matériaux en tant que matières premières pour préparer le support du sorbant.

4. Procédé de production du sorbant selon la revendication 1, **caractérisé par** l'utilisation de la dolomite semi-calcinée obtenue par brûlage d'une dolomite naturelle au premier stade à des températures de $750 \pm 30°C$ dans des conditions soit statiques, soit dynamiques en tant que composant actif du sorbant.

5. Procédé de production du sorbant selon la revendication 1, **caractérisé par** l'utilisation de ciment portland, de préférence du ciment portland blanc, en tant que liant de type ciment.

6. Procédé de production du sorbant selon les revendications 1 à 5, **caractérisé par** le tri du mortier de ciment durci écrasé en au moins trois fractions, à savoir (1,0 à 3,0), (0,3 à 1,0) et (0,0 à 0,3) mm.

7. Sorbant destiné à l'élimination et à l'immobilisation des métaux lourds et/ou des phosphates dans des liquides ou des solides contaminés, **caractérisé par** un procédé pour sa production conforme aux revendications précédentes, préparé sous forme d'un matériau granulaire composite constitué de :

   - un composant de support (formant un corps) de nature schisteuse et/ou provenant des déchets de la préparation du charbon,

- un composant actif qui est une dolomite semi-calcinée présentant une teneur élevée en MgO.CaCO₃ obtenue par brûlage d'une dolomite naturelle au premier stade à des températures de $750 \pm 30°C$, et
- un liant de type ciment de préférence du ciment portland blanc,

où les composants principaux et l'agent se trouvent dans le rapport massique défini : (support) : (composant actif) : (liant) = (1,3 à 4,3) : (1,0 à 1,3) : (1,0 à 1,5), avec une taille de grain définie, suivant les applications supposées du sorbant pour la purification de solides ou de liquides contaminés.

8.  Procédé d'élimination et d'immobilisation des métaux lourds et/ou des phosphates dans des liquides contaminés, **caractérisé par** l'utilisation du sorbant selon la revendication 7 à une taille de grain définie de (1,0 à 3,0) mm et/ ou (0,3 à 1,0) mm en tant que corps de filtre (matériaux de matrice) dans des systèmes dynamiques.

9.  Procédé d'élimination et d'immobilisation des métaux lourds et/ou des phosphates dans des liquides contaminés, **caractérisé par** l'utilisation du sorbant selon la revendication 7 sous une forme pulvérulente avec la taille de grain définie moins 0,3 mm en tant qu'additif des solutions contaminées, qui peut par conséquent être séparé de la phase liquide par sédimentation, occasionnellement par floculation et sédimentation dans des cuves de sédimentation avant le stade final de nettoyage à l'eau par filtration en utilisant un filtre mécanique.

10. Procédé d'élimination et d'immobilisation des métaux lourds et/ou des phosphates dans des solides contaminés, **caractérisé par** l'utilisation du sorbant selon la revendication 7 sous une forme pulvérulente avec la taille de grain définie principalement moins 0,3 mm en tant qu'additif de sols, de sédiments, ou de déchets solides (boues) contaminés, lequel est mélangé avec la phase solide contaminée avant son rejet.